(19) **Europäisches Patentamt**

**European Patent Office**

**Office européen des brevets**

(11) **EP 1 365 497 A1**

(12) **EUROPEAN PATENT APPLICATION**
published in accordance with Art. 158(3) EPC

(43) Date of publication:
26.11.2003 Bulletin 2003/48

(51) Int Cl.[7]: **H02K 41/03**

(21) Application number: 00988525.2

(86) International application number:
**PCT/BY00/00006**

(22) Date of filing: 28.12.2000

(87) International publication number:
**WO 02/054568 (11.07.2002 Gazette 2002/28)**

(84) Designated Contracting States:
**AT BE CH CY DE DK ES FI FR GB GR IE IT LI LU MC NL PT SE TR**
Designated Extension States:
**AL LT LV MK RO SI**

(71) Applicant: **Zharski, Vladimir Vladimirovich Minsk, 220118 (BY)**

(72) Inventor: **Zharski, Vladimir Vladimirovich Minsk, 220118 (BY)**

(74) Representative: **Benatov, Emil Gabriel, Dr. Bl. 36B, Liuliakova gradina Str. 1113 Sofia (BG)**

(54) **LINEAR SYNCHRONOUS MOTOR**

(57)     A synchronous motor with improved traction performance linearization and increased synchronous motor reliability and maintainability consists of a stator comprising at least one ferromagnetic yoke, on which identical permanent magnets having the alternate pole polarity are secured; and bearings, on which the frame with an armature comprising a magnetic conductor, and windings are mounted. The magnetic conductor and control winding of the armature are made in the form of plurality of identical electromagnetic modules secured in the frame and mounted relative to each other with a specific spatial phase shift in the direction of motion. The frame is provided with passages allowing a refrigerant flow and with openings for mounting the electromagnetic modules.

Fig. 8

EP 1 365 497 A1

**Description**

The invention relates to electric engineering and may be used in an electric drive of transporting and positioning devices.

A linear synchronous motor comprising an U-shaped linear yoke made of a soft magnetic material, the interior sides of which dispose a plurality of permanent magnets (stator) and a system of disk coils (armature), secured using a linear bearing in the gap between the magnets is known /1/.

The disadvantage of the analog resides in the low value of the specific tractive force per a unit of the working surface area of the armature.

A synchronous motor described in /2/ is the closest prior art for the proposed motor. The synchronous motor comprises an armature having a plurality of teeth with a common yoke spaced apart by slots, in which control windings are accommodated. A stator (magnetic "path") comprises a plurality of permanent magnets secured with the alternate polarity along the direction of motion. Using guides with linear bearings the armature is secured in the frame to form a small air gap over the magnetic path. In order to obtain limiting values of tractive force, the armature is provided with a radiator comprising a plurality of tubes housed in each slot between the winding and the yoke of the magnetic conductor. The tubes are connected to one another to allow a cooling liquid to flow. The armature with the radiator is secured within the frame using, for example, an epoxy compound.

The motor linearization (reducing higher harmonic components in the tractive force) is obtained through a specific ratio between the pole width and the magnetic conductor opening.

The disadvantage of the prior art is that the traction performances contain harmonics of the higher order than the fundamental harmonic defined by the stator pole pitch. This results in the positioning precision error or reduced dynamic characteristics, when the motor is used in the electric drive.

The disadvantage of the prior art is also the limited possibilities of traction performance linearization of the motor as well as insufficient reliability and maintainability thereof. This is especially evident in developing power linear synchronous motors and is explained by the integrated construction of the motor armature and the cooling radiator.

The object of the invention is to expand the possibilities of the traction performance linearization and increase synchronous motor reliability and maintainability.

The above object is attained in a synchronous motor comprising a stator consisting of at least one ferromagnetic yoke, on which identical permanent magnets having the alternate pole polarity are secured; and bearings, on which the frame with an armature comprising a magnetic conductor, and windings are mounted.

The magnetic conductor and control winding of the armature are made in the form of plurality of identical electromagnetic modules secured in the frame and mounted relative to each other with a specific spatial phase shift in the direction of motion. The frame is provided with passages allowing a refrigerant flow and with openings for mounting the electromagnetic modules.

The frame can be made of a material with a high thermal conduction, for example, aluminum.

To facilitate attaining the above object, the electromagnetic module may be constructed:

a) in the form of a U-shaped magnetic conductor with control windings disposed on bars thereof;
b) in the form of two, arranged one after another in tandem, U-shaped magnetic conductors the adjacent bars of which are surrounded by the control winding;
c) in the form of two U-shaped magnetic conductors disposed in a back-to-back relationship, with the control winding surrounding the backs thereof;
d) in the form of a magnetoconductive bar on which the control winding is arranged;
e) in the form of a E-shaped magnetic conductor having control windings.

The set aim is realized in direct and inverted type motors, linear (balanced and unbalanced) type motors, circular cylindrical motors and circular end motors.

The armature frame is provided with openings for mounting of electromagnetic modules. To reduce the braking effect caused by eddy currents, the stiffening ribs, formed by webs between the openings, are made shorter than the length of bars of U-shaped magnetic conductors by the value being approximately half the spacing between the bars of the adjacent magnetic conductors.

To linearize the traction performance, the openings are made beveled in the frame. The openings may be beveled in one direction. The bevel may be made so that one group of openings is beveled in one direction and the second one - in the other direction.

The above object is also attained by selecting the spacing A between the centers of pole piece pairs as follows:

$$A = (0.5 \pm 1/4\kappa)T$$

wherein T is the period of disposing magnets on the stator;

$\kappa$ is a number of phases in the armature.

The spacing B between the centers of pole piece pairs in the phase is selected as follows:

$$B=(M\pm1/2\kappa(p-c))T.$$

wherein p is a number of bar pairs in phase;

c is a figure from the series 0, 1, 2...;
M is an integer.

To linearize the traction performance, the armature of the linear motor is provided with the first and end magnetoconductive bars without windings.

To increase the reliability (by virtue of the improved refrigeration), a nonmagnetic metallic insert, provided with passages allowing the refrigerant to flow, is disposed between the adjacent bars or backs of U-shaped magnetic conductors of the electromagnetic module.

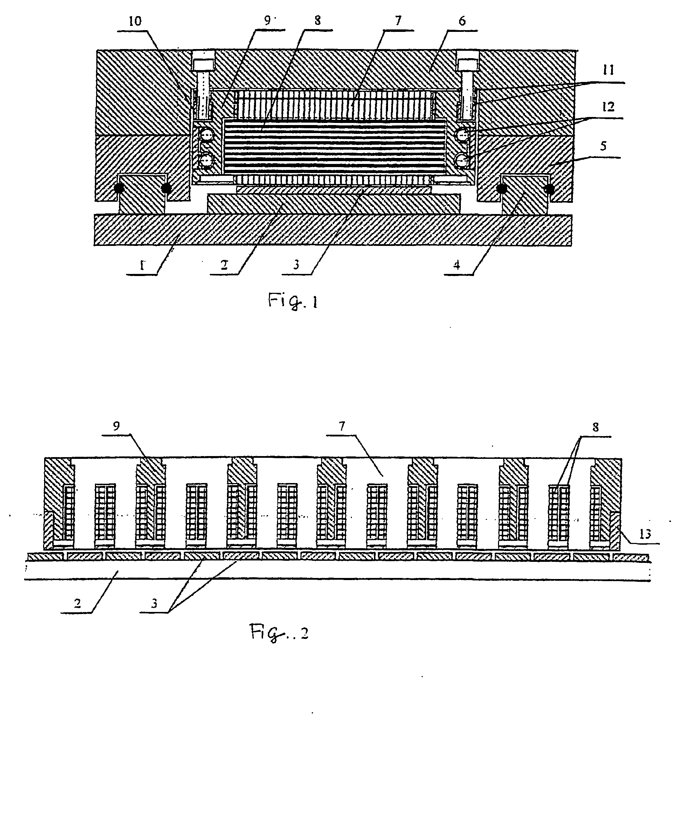

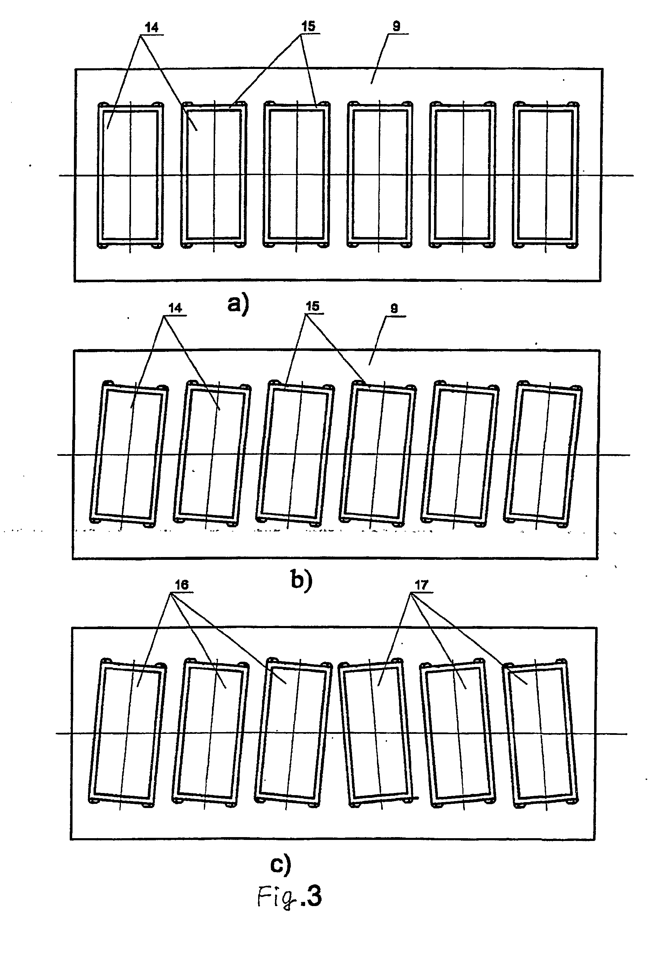

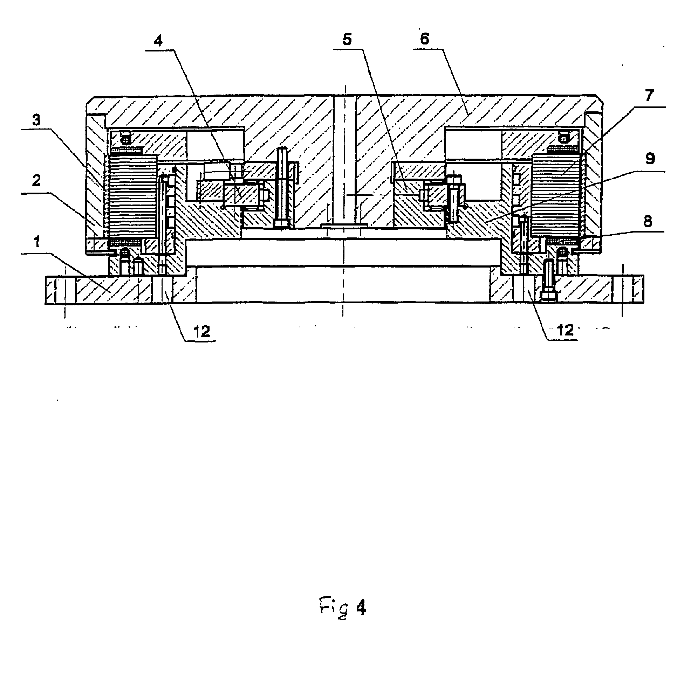

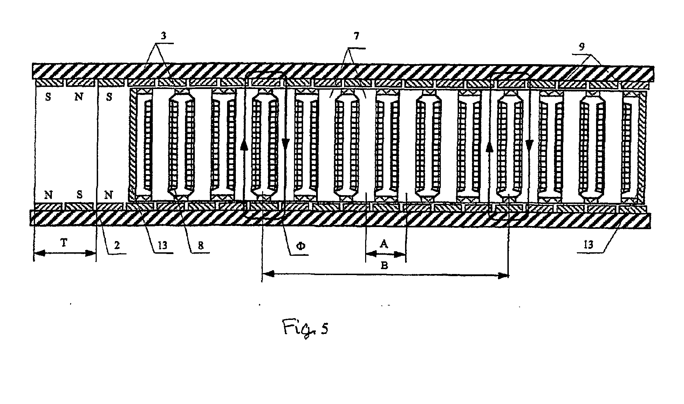

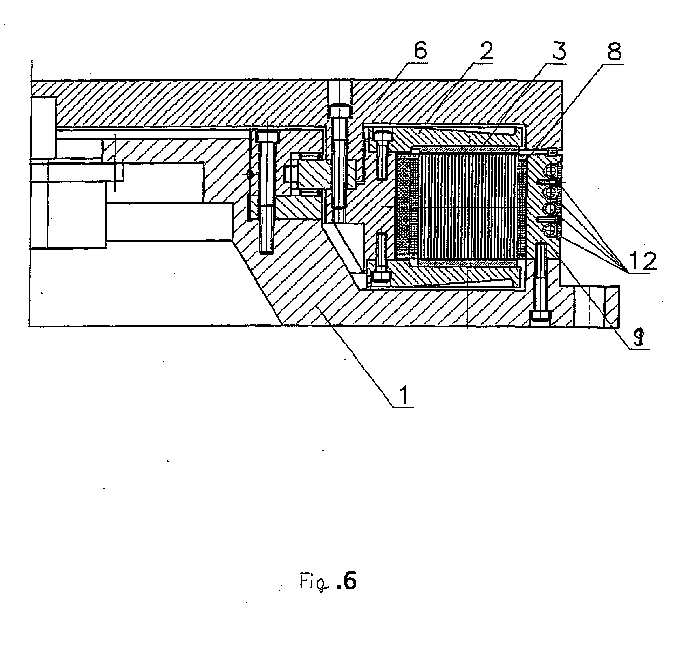

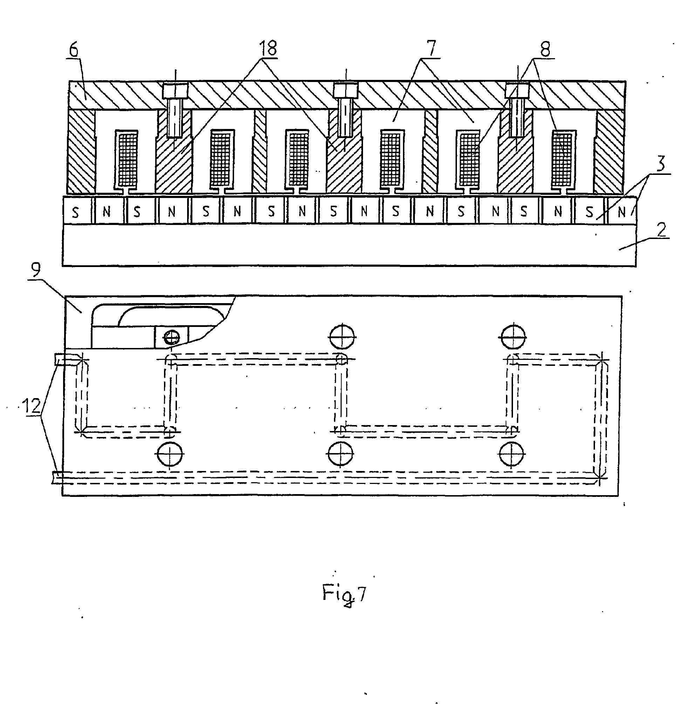

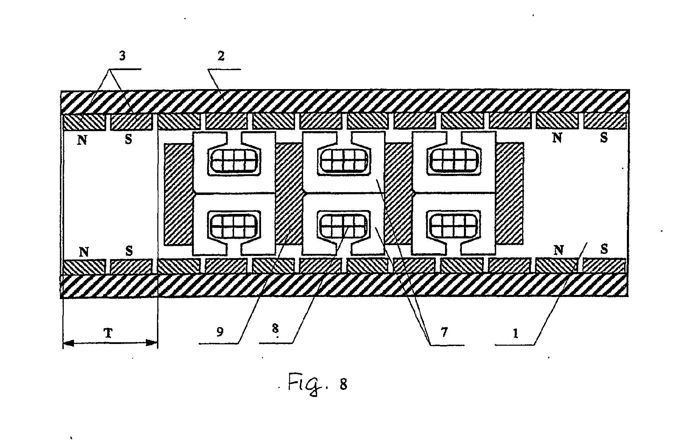

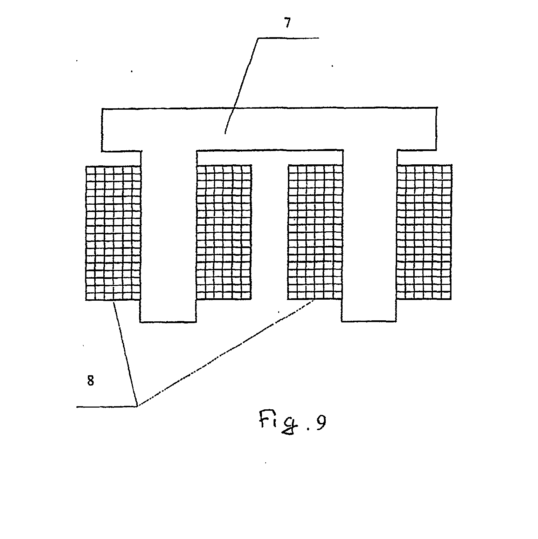

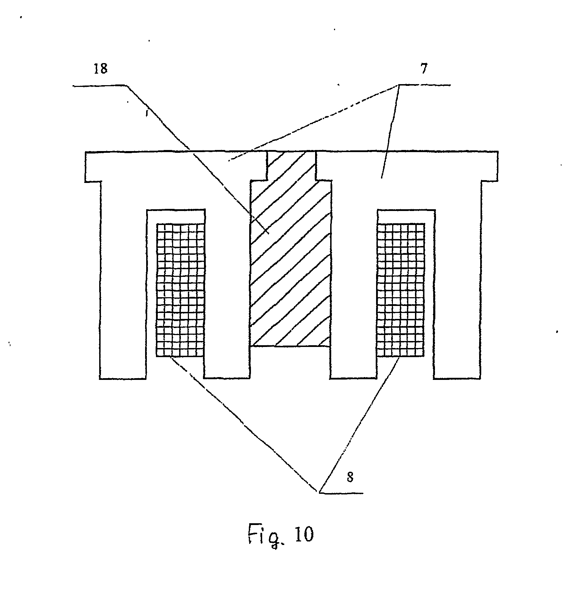

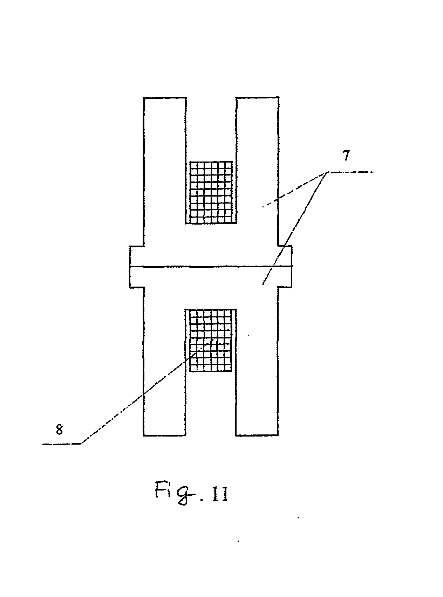

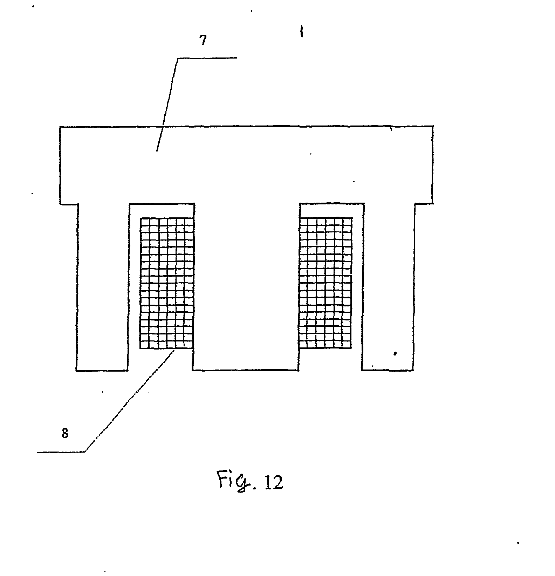

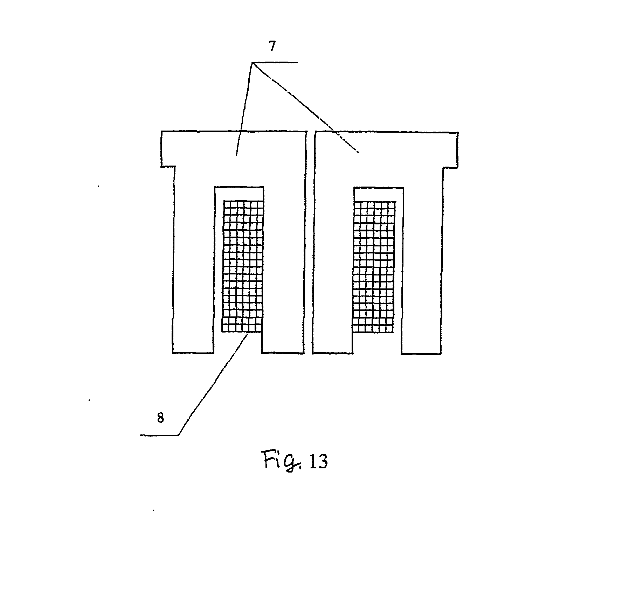

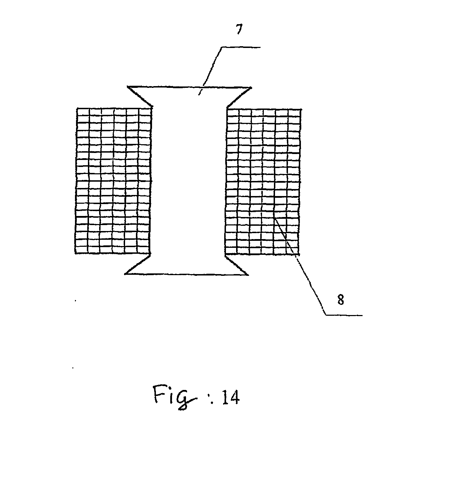

Fig. 1 shows the principal arrangement (cross-sectional view) of a linear synchronous motor. Fig. 2 shows the longitudinal section of the magnetic "path" and armature of the linear synchronous motor. Fig. 3 is the plan view of the principal arrangement of the armature frame having openings. Fig. 4 illustrates the principal arrangement of a circular cylindrical motor. Fig. 5 presents the cross-section (development) of the principal arrangement of a stator and the armature of a three-phase linear balanced synchronous bar motor. Fig. 6 is the principal arrangement of a bar circular end motor. Fig. 7 demonstrates a three-phase synchronous motor according to claim 3. Fig 8 shows a three-phase synchronous motor according to claim 4. Figs. 9-14 present principal arrangements of embodiments of electromagnetic modules.

A linear synchronous motor consists of a base (1) mounting a magnetic "path" comprising a ferromagnetic yoke (2) and permanent magnets (3) disposed with alternate magnetic pole polarity along the direction of motion. Two linear guides (4) with bearings (5), on which the motor armature is secured using the frame (6), are fixed to the base (1). The armature consists of a series of U-shaped magnetic conductors (7) having control windings (8) secured with a heat-conducting compound and with protrusions in a metal nonmagnetic carcass (9) made, for example, of duralumin. The carcass (9) is secured to the frame (6) using a load-bearing beam (10). The carcass (9) is heat-insulated from the frame (6) and beam (10) using heat insulation gaskets (11). To allow the flow of a cooling liquid, the carcass (9) is provided with passages (12). The front parts of the carcass (9) are provided with ferromagnetic bars (13) linearizing the motor traction performance.

Openings (14) with beads (15) to mount U-shaped magnetic conductors are made in the carcass (9). Figs. 3a, 3b and 3c illustrate embodiments with various openings 14. Fig. 3b shows the principal arrangement of the carcass (9) in which the openings (14) are beveled in one direction. Fig. 3c shows a group of openings (16) beveled in one direction, while a group of openings (17) is beveled in the opposite one.

The period of disposing the magnets on the magnetic "path" and the number of armature electric phases define the spacing (phase shift) at which the U-shaped magnetic conductors are disposed relative to each other.

The linear synchronous bar motor comprises a base, linear guides with a bearing and a frame with fasteners (not shown in Fig. 5 because of great variety of possible standard technical solutions), and also a stator including two disposed in parallel ferromagnetic plates (2), on which identical permanent magnets (3) with alternate S-N pole polarity are secured. The movable armature includes a plurality of bar magnetic conductors (7), on which control windings (8) are mounted. The bar magnetic conductors (7) are made of laminated electric steel and fixed in bearing members of the armature carcass (9). In addition, the armature is provided with the first and end magnetoconductive bars (13) without control windings. The bar magnetic conductors (7) with control windings (8) are fixed in the armature frame using, for example, an epoxy compound.

The arrangements of the motors shown in other figures and the arrangements of electromagnetic modules are clear for understanding.

So, arrangements of motors, shown in Figs. 4, 6-8, consist of similar nodes and details, as circumscribed above linear synchronous motor. These details and nodes are designated by identical figures. Instead of the linear bearing, the circular face motor and cylindrical motors {Fig. 6, Fig. 4} comprise the radial bearing. Furthermore, a rotor (rotating part) is stator, on which the fixed magnets are placed, i. e. these motors belong to the class of so-called machines of the inverted type.

Figs. 9-14 show respectively arrangements of electromagnetive modules made as follows.

Fig. 9 shows the arrangement of the electromagnetic module made in the form of U-shaped magnetic conductor 7 with control windings 8 disposed on its bars.

Fig. 10 shows the arrangement of the electromagnetic module made in the form of two U-shaped magnetic conductors 7, arranged one after another in tandem, which adjacent bars are surrounded by the control winding 8, and a metal non-magnetic insertion 18 is disposed between magnetic conductors.

Fig. 11 shows the arrangement of the electromagnetic module made in the form of two U-shaped magnetic conductors 7 disposed in a back-to-back relationship, with the control winding 8 surrounding the backs thereof.

Fig. 12 shows the arrangement of the electromagnetic module made in the form of an E-shaped magnetic conductor 7 having control windings 8.

Fig. 13 shows the arrangement of the electromagnetic module made in the form of two U-shaped magnetic conductors 7 disposed in a back-to-back relationship, with the control winding 8 surrounding the adjacent bars thereof.

Fig. 14 shows the arrangement of the electromagnetic module made in the form of the bar magnetic conductor 7, on which the control windings 8 is disposed.

The operation of the proposed motor is based on the interaction between the traveling electromagnetic field of the armature and the harmonic magnetic field of the stator (rotor). For this purpose, the phase control windings are coupled to the respective electric current network.

The object set in the proposed apparatus is attained through several embodiments.

The analysis of the spatial distribution of magnetomotive force (mmf) of the permanent magnets of the motor stator shows that, in addition to the fundamental frequency, the harmonic composition includes a series of odd harmonics, i.e. 1, 3, etc. This, however, corresponds to ideal conditions, i.e. when the spread of harmonic and magnetic parameters of permanent magnets is absent. Thus, in practice even harmonics and subharmonics are present in the mmf spectrum along with the above harmonics. To eliminate their influence on the pattern of the motor traction performance, an elemental part of each motor phase is made of a pair of bars arranged adjacently in a regular manner in a pole pitch. Arranging the phase elemental part in this manner primarily eliminates the influence of the direct component and of the second component, since the magnetomotive forces of the said components are coupled to the phase magnetic circuit toward each other.

The second technical solution realized in the motor and aimed at reducing the harmonic components in the traction performance resides in changing the armature pole pitch compared to the stator pole pitch. The value of this change depends, as shown above, on the harmonic number, motor phase number and the number of phase elemental parts.

And finally, to decrease the end effect caused by the unequal conditions in which the end and central armature bars operate, the armature is provided with the first and end bars without windings. The operation thereof resides in the fact that position, shape and geometric dimensions thereof are selected so that the resulting force of the de-energized armature equals zero.

Attaining the above object of the proposed invention is explained also by the following. It is apparent that the traction performance in the proposed motor arrangement is easily linearized by mounting electromagnetic modules at an angle to the direction of motion. The physics of eliminating higher harmonics of the mmf of the "path" permanent magnets in the motor traction performance is explained by the effect of integrating the beveled poles of U-shaped magnetic cores of harmonics with different phases. The bevel value depends on the harmonic number that needs to be eliminated.

In contrast to the pertinent art, for example, the failure of the cooling radiator in the proposed motor will not automatically result in the failure of the armature with control windings, since entering of the cooling liquid into the armature coils is structurally excluded.

The improved cooling of windings of the motor by enlarging the cooling area of the control windings and making of the frame of the material with high thermal conduction increases the reliability of the motor under the critical behavior operation.

The ribbed structure of the frame increases stiffness thereof, enhancing thereby also the motor reliability.

The specific feature of the motor constructions shown in Fig. 4 and 6 is that they represent inverted-type motors, i.e. their stators operate as rotors. This makes the rotor lighter and simplifies the cooling system, since it becomes immobile.

The electromagnetic modules constructed from dual U-shaped or E-shaped magnetic conductors and one control winding allow to reduce the copper consumption and ohmic power loss at an equal value of the tractive force compared to the bar or U-shaped magnetic conductors.

The improved maintainability is generally provided by replacement of one faulty module.

The foregoing is a description of a preferred embodiment of the invention, which is given here by way of example only. The invention is not to be taken as limited to any of the specific features as described but comprehends all such variations thereof as come within the scope of the appended claims.

References Cited

1. US Patent No. Re. 34,674, 1994
2. US Patent No. 5,642,013, 1997

**Claims**

1. A synchronous motor comprising at least one ferromagnetic yoke, on which permanent magnets are disposed, and an armature comprising a magnetic conductor and control windings, **characterized in that** the magnetic conductor and the control windings are formed at least of two electromagnetic modules arranged relative to each other with a spatial phase shift in the direction of motion.

2. The motor according to claim 1, **characterized in that** permanent magnets are disposed in the ferromagnetic yoke with alternate polarity.

3. The motor according to claims 1 and 2, **characterized in that** the electromagnetic modules are disposed in the openings of the frame provided with passages for refrigerator flow.

4. The motor according to claims 1 to 3, **characterized in that** the frame is coupled with the yoke by bearings.

5. The motor according to claims 1 to 4, **characterized in that** said electromagnetic module is constructed in the form of an U-shaped magnetic core with control windings disposed on the bars thereof.

6. The motor according to claims 1 to 4, **characterized in that** the electromagnetic module is constructed of two arranged one after another in tandem U-shaped magnetic conductors, the adjacent bars of which are surrounded by a control winding.

7. The motor according to claims 1 to 4, **characterized in that** said electromagnetic module is constructed in the form of two U-shaped magnetic conductors arranged in a back-to-back relationship, with the control winding surrounding backs thereof.

8. The motor according to claims 1 to 4, **characterized in that** the electromagnetic module is constructed in the form of a bar magnetic conductor, on which the control winding is disposed.

9. The motor according to claims I to 4, **characterized in that** the electromagnetic module is constructed in the form of E-shaped magnetic conductor with control windings.

10. The motor according to claims 1 to 9, **characterized in that** it is constructed as a linear motor.

11. The motor according to claims 1 to 6, **characterized in that** the motor constructed as a circular cylindrical motor.

12. The motor according to claims 1 to 6 and 9, **characterized in that** the motor is constructed as a circular end motor.

13. The motor according to any of claims 10 to 12, **characterized in that** the frame openings are beveled.

14. The motor according to claim 13, **characterized in that** one group of frame openings is beveled in one direction and the second group of frame openings is beveled in the other direction.

15. The motor according to claim 1-14, **characterized in that** lateral external surfaces of the bars of magnetic conductors for electromagnetic modules are provided with protrusions for securing them in the frame openings.

16. The motor according to claim 8, **characterized in that** an elemental part of each motor phase is formed of a pair of bars having control windings that are disposed adjacent to each other, the number of such pairs in the motor phase being not less than two.

17. The motor according to claim 16, **characterized in that** the magnetoconductive bars are provided with pole pieces and the spacing A between centers of pole pieces in the pair is:

$$A=(0.5\pm0.25/K))T.$$

wherein, T is the period of disposing permanent magnets on the stator;
   K is the number of phases in the armature.

18. The motor according to claim 17, **characterized in that** the spacing B between the centers of the pairs of the pole pieces in the phase is:

$$B=(M\pm1/2 \cdot \kappa(p+c)T$$

wherein, p is the number of bar pairs in a phase;

   M is an integer;
   c is a figure from the series 0, 1, 2, ...

19. The motor according to one of claims 16-18, **characterized in that** the armature is provided with a first and an end magnetoconductive bars without windings.

20. The motor according to claims 4-5, **characterized in that** the stiffening ribs formed by webs between the frame openings are shorter than the length of magnetic conductor bars for electromagnetic modules by the value being approximately half the rib width.

21. The motor according to claim 6, **characterized in that** a nonmagnetic metallic insert is disposed between adjacent bars of U-shaped magnetic cores of the electromagnetic module.

22. The motor according to claim 7, **characterized in that** a nonmagnetic metallic insert is disposed between backs of the U-shaped magnetic conductors of the electromagnetic module.

**23.** The motor according to claims 21 and 22, **characterized in that** the nonmagnetic metallic inserts are provided with passages to allow flowing of a refrigerant.

**24.** The motor according to any of claims 1 to 23, **characterized in that** the frame is made of a material with high thermal conduction, such as aluminuim.

**1.** A synchronous motor comprising two ferromagnetic yokes, on which permanent magnets with alternate polarity are disposed, and mounted between said yokes an armature comprising a magnetic conductor and control windings, **characterized in that** the magnetic conductor and the control windings, **characterized in that** the magnetic conductor of the armature is made in the form of at least of two magnetically uncoupled electromagnetic modules formed as magnetoconductive bars, on which control windings are mounted, said bars being arranged relative to each other with a spatial phase shift in the direction of motion.

**2.** The motor according to claims 1, **characterized in that** the electromagnetic modules are disposed in the openings of the armature frame provided with passages for the coolant flow.

**3.** The motor according to claims 1 to 2, **characterized in that** the frame is coupled with the yoke by bearings.

**4.** The motor according to claims 1 to 3, **characterized in that** it is constructed as a linear motor.

**5.** The motor according to claims 1 to 3, **characterized in that** the motor constructed as a circular cylindrical motor.

**6.** The motor according to claims 1 to 3, **characterized in that** the motor is constructed as a circular end motor.

**7.** The motor according to any of claims 4 to 6, **characterized in that** the frame openings are beveled.

**8.** The motor according to claim 7, **characterized in that** one group of frame openings is beveled in one direction and the second group of frame openings is beveled in the other direction

**9.** The motor according to claim to 8, **characterized in that** lateral external surfaces of the bars of magnetic conductors for electromagnetic modules are provided with protrusions for securing them in the frame openings.

**10.** The motor according to claim 1 to 9, **characterized** in that an elemental part of each motor phase is formed of a pair of bars having control windings, said pairs of bars being disposed adjacent to each other, the number of such pairs in the motor phase being not less than two.

**11.** The motor according to claim 10, **characterized in that** the magnetoconductive bars are provided with pole pieces, and the spacing A between centers of pole pieces in the pair is:

$$A=(0.5\pm0.25/k))T$$

wherein, **T** is the period of disposing permanent magnets on the staler;
   **k** is the number of phases in the armature.

**12.** The motor according to claim 11, **characterized in that** the spacing B between the centers of the pairs of the pole pieces in the phase is:

$$B=(M\pm1/2\ k(p+c)T$$

wherein, **p** is the number of bar pairs in a phase;

   **M** is an integer;
   **c** is a figure from the series 0, 1, 2, ...

**13.** The motor according to one of claims 11-12, **characterized in that** the armature is, provided with a first and an end magnetoconductive bars without windings.

Fig. 1

FiG.. 2

a)

b)

c)

Fig.3

Fig 4

Fig. 5

Fig .6

Fig.7

Fig. 8

Fig. 9

Fig. 10

Fig. 11

7

8

Fig. 12

Fig. 13

Fig : 14

## INTERNATIONAL SEARCH REPORT

| International application No. |
|---|
| PCT/BY 00/00006 |

**A. CLASSIFICATION OF SUBJECT MATTER**
IPC 7   H02K41/03

According to International Patent Classification (IPC) or to both national classification and IPC

**B. FIELDS SEARCHED**

Minimum documentation searched  (classification system followed by classification symbols)
IPC 7   H02K

Documentation searched other than minimum documentation to the extent that such documents are included in the fields searched

Electronic data base consulted during the  international search (name of data base and,  where practical, search terms used)

EPO-Internal, PAJ

**C. DOCUMENTS CONSIDERED TO BE RELEVANT**

| Category ° | Citation of document, with indication,  where appropriate, of the relevant passages | Relevant to claim No. |
|---|---|---|
| X | DE 198 29 052 C (SIEMENS AG) 30 December 1999 (1999-12-30) | 1,2,5,6, 8-10,13, 14,16, 19,20 |
| A | page 2, line 3 - line 59 page 3, line 56 -page 4, line 41; claims 1-4; figures 1-4 | 4,17,18 |
| X | US 6 016 021 A (HINDS WALTER E) 18 January 2000 (2000-01-18) | 1,4,6,8, 10,16, 20,21 |
| Y | column 2, line 63 -column 4, line 37; claim 1; figures 1,2,5,6 | 1,3,4,6, 8,10-16, 20,21, 23,24 |

-/--

| [X] | Further documents are listed in the  continuation of box C. | [X] | Patent family members are listed in annex. |
|---|---|---|---|

° Special categories of cited documents :

"A" document defining the general state of the  art which is not considered to be of particular relevance

"E" earlier document but published on or after the  international filing date

"L" document which may throw doubts on priority  claim(s) or which is cited to establish the publication date of another citation or other special reason (as specified)

"O" document referring to an oral disclosure, use,  exhibition or other means

"P" document published prior to the international  filing date but later than the priority date claimed

"T" later document published after the  international filing date or priority date and not in conflict with the  application but cited to understand the principle or theory  underlying the invention

"X" document of particular relevance; the claimed  invention cannot be considered novel or cannot be considered  to involve an inventive step when the document is  taken alone

"Y" document of particular relevance; the claimed  invention cannot be considered to involve an inventive  step when the document is combined with one or more other  such documents, such combination being obvious to a  person skilled in the art.

"&" document member of the same patent family

| Date of the actual completion of the international search | Date of mailing of the International search report |
|---|---|
| 29 August 2001 | 05/09/2001 |

| Name and mailing address of the ISA | Authorized officer |
|---|---|
| European Patent Office, P.B. 5818 Patentlaan 2 NL – 2280 HV Rijswijk Tel. (+31–70) 340–2040, Tx. 31 651 epo nl, Fax: (+31–70) 340–3016 | von Rauch, E |

Form PCT/ISA/210 (second sheet) (July 1992)

# EP 1 365 497 A1

## INTERNATIONAL SEARCH REPORT

International Application No
PCT/BY 00/00006

**C.(Continuation) DOCUMENTS CONSIDERED TO BE RELEVANT**

| Category ° | Citation of document, with indication,where appropriate, of the relevant passages | Relevant to claim No. |
|---|---|---|
| Y | US 5 998 889 A (NOVAK W THOMAS) 7 December 1999 (1999-12-07) | 1,3,4,6, 10,15, 20,21, 23,24 |
| A | column 3, line 7 -column 4, line 16; figures 2-7 | 8,22 |
| | --- | |
| Y | US 5 910 691 A (WAVRE NICOLAS) 8 June 1999 (1999-06-08) | 8,13,14, 16 |
| A | column 5, line 38 -column 6, line 61 | 3,4,10, 15,17, 18,20 |
| | column 8, line 53 -column 9, line 9; claims 1,4; figures 1,4,4A,7-15,17,18 | |
| | --- | |
| Y | DE 198 53 771 A (ELEKTRISCHE AUTOMATISIERUNGS U) 25 May 2000 (2000-05-25) | 11,12 |
| A | column 1, line 55 - line 59; claim 1; figures 1,2 | 4,8,10 |
| | --- | |
| X | PATENT ABSTRACTS OF JAPAN vol. 1998, no. 14, 31 December 1998 (1998-12-31) -& JP 10 257750 A (YASKAWA ELECTRIC CORP), 25 September 1998 (1998-09-25) | 1-4,8, 10,15, 16,19 |
| A | abstract; figures 1,3-6 | 11,12,20 |
| | ----- | |

Form PCT/ISA/210 (continuation of second sheet) (July 1992)

21

| INTERNATIONAL SEARCH REPORT | | International Application No PCT/BY 00/00006 |

| Patent document cited in search report | | Publication date | Patent family member(s) | | Publication date |
|---|---|---|---|---|---|
| DE 19829052 | C | 30-12-1999 | WO | 0001059 A | 06-01-2000 |
| | | | EP | 1092259 A | 18-04-2001 |
| US 6016021 | A | 18-01-2000 | US | 5965962 A | 12-10-1999 |
| | | | AU | 1376699 A | 06-09-1999 |
| | | | EP | 1057244 A | 06-12-2000 |
| | | | WO | 9943073 A | 26-08-1999 |
| US 5998889 | A | 07-12-1999 | NONE | | |
| US 5910691 | A | 08-06-1999 | NONE | | |
| DE 19853771 | A | 25-05-2000 | NONE | | |
| JP 10257750 | A | 25-09-1998 | NONE | | |

Form PCT/ISA/210 (patent family annex) (July 1992)